# EUROPEAN PATENT SPECIFICATION

(11) **EP 4 261 916 B1**
(45) Date of publication and mention of the grant of the patent: **02.07.2025**
(21) Application number: 22887622.3
(22) Date of filing: 26.10.2022
(51) Int. Cl.: H01M 4/04, B05C 9/12

(54) **MANUFACTURING APPARATUS OF ELECTRODE FOR SECONDARY BATTERY**
VORRICHTUNG ZUR HERSTELLUNG EINER ELEKTRODE FÜR EINE SEKUNDÄRBATTERIE
APPAREIL POUR LA FABRICATION D'UNE ÉLECTRODE POUR UNE BATTERIE SECONDAIRE

(30) Priority: 27.10.2021 KR 20210144526; 25.10.2022 KR 20220138119
(43) Date of publication of application: 18.10.2023
(73) Proprietor: LG Energy Solution, Ltd., Seoul 07335 (KR)
(72) Inventor: JEON, Inho, Daejeon 34122 (KR); LEE, Hee Won, Daejeon 34122 (KR); KIM, Jimin, Daejeon 34122 (KR)
(74) Representative: Plasseraud IP
(86) International application number: PCT/KR2022/016500
(87) International publication number: WO 2023/075426

(56) References cited:
- CN-U- 208 116 536
- JP-A- 2005 044 539
- JP-A- 2018 026 334
- KR-A- 20160 141 448
- KR-A- 20160 141 448
- KR-A- 20170 094 642
- US-B2- 11 103 905

## Description

### [TECHNICAL FIELD]

The present disclosure relates to a manufacturing apparatus of an electrode for a secondary battery, and more particularly, to a manufacturing apparatus for a non-coated part of the electrode substrate.

### [BACKGROUND]

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifetime characteristics.

In recent years, as the field of application for secondary batteries expands, the demand for higher-capacity secondary batteries (e.g., for electric vehicles) is also increasing rapidly.

A secondary battery includes an electrode assembly composed of a positive electrode, a negative electrode and a separator (i.e., separation membrane) interposed therebetween. In general, the positive electrode and the negative electrode are each formed by coating an electrode active material onto a current collector of an electrode substrate. In order to construct the positive electrode and the negative electrode as a good-quality electrode, problems such as folding or wrinkles should not occur on the current collector even after the electrode active material is coated onto the current collector of the electrode substrate.

US 11 193 905 B2 discloses a manufacturing apparatus of electrode for a secondary battery. Document KR 2016 0141448 A discloses a manufacturing apparatus of an electrode for a secondary battery comprising a transfer unit that transfers an electrode sheet coated with an electrode active material layer from an unwinder; a rolling unit that is arranged on the transfer unit and rolls the electrode active material layer composed of the electrode active material; and a pressing unit that is arranged adjacently to the rolling unit and presses the non-coated part of the current collector to which the electrode active material is not applied, wherein the pressing unit comprises, a roll member; and a ring assembly that is detachably coupled to the roll member and comes into contact with the non-coated part to press the non-coated part.

### [DETAILED DESCRIPTION OF THE INVENTION]

### [Technical Problem]

The present disclosure has been designed to solve the above-mentioned problems, and an object of the present disclosure is to provide a manufacturing apparatus of an electrode for a secondary battery which can prevent occurrence of defects on a non-coated part of an electrode substrate during a manufacturing process of an electrode for a secondary battery.

The objects of the present disclosure are not limited to the aforementioned objects, and other objects which are not mentioned herein should be clearly understood by those skilled in the art from the following detailed description and the accompanying drawings.

### [Technical Solution]

According to the present invention, there is provided a manufacturing apparatus of an electrode for a secondary battery as defined in the appended set of claims. The manufacturing apparatus comprises a transfer unit that transfers a current collector from an unwinder; a coating unit that applies an electrode active material to at least one surface of the current collector; a rolling unit that is arranged on the transfer unit and rolls the electrode active material layer composed of the electrode active material; and a pressing unit that is arranged adjacently to the rolling unit and presses the non-coated part of the current collector to which the electrode active material is not applied, wherein the pressing unit includes a roll member; and a ring assembly that is detachably coupled to the roll member and comes into contact with the non-coated part to press the non-coated part.

The ring assembly includes a first ring member that is detachably fixed to the roll member; and a second ring member that has a larger diameter than the first ring member and is connected to the first ring member to press the pressing unit.

A third ring member having an elastic force may be coupled to an outer peripheral surface of the second ring member, and the third ring member may be a rubber.

A depressed part is formed on the inner surface of the third ring member, and a protrusion part is formed on the outer peripheral surface of the second ring member, and the protrusion part of the second ring member may be fitted into the depressed part of the third ring member.

The first ring member is made in a form in which both ends are formed as free ends, and extension parts each extending from both ends may be provided with an opening for screw coupling.

The respective extension parts have a length greater than the width of the first ring member and may be arranged parallel to the roll member.

The first ring member may be rotatably coupled to the second ring member.

The respective extension parts may extend vertically from both ends.

A width of the second ring member may be formed to be smaller than a width of the non-coated part.

Both ends of the roll member are connected to an elevation arm and a cylinder, respectively, so that the roll member can be displaced with respect to the current collector.

The ring assembly is arranged at equal intervals on the roll member and may be provided by plural numbers.

The pressing unit may be arranged at the front and rear ends of the rolling unit, respectively.

The pressing unit may be configured so as to press the non-coated part of the first surface of the current collector and the non-coated part of the second surface opposing to the first surface, respectively.

### [Advantageous Effects]

A manufacturing apparatus of an electrode for a secondary battery according to the present disclosure can press the non-coated part with a ring assembly rotating by a roll member in the process of manufacturing electrodes for secondary batteries, and prevent defects that cause wrinkles on the non-coated part, thereby increasing the efficiency of the manufacturing process and providing a good-quality electrode.

### [BRIEF DESCRIPTION OF THE DRAWINGS]

Fig. 1 is a schematic diagram showing an electrode manufacturing apparatus according to one embodiment of the present disclosure;
Fig. 2 is a partial perspective view showing an electrode manufacturing apparatus according to one embodiment of the present disclosure;
Fig. 3 is a perspective view illustrating a pressing unit of an electrode manufacturing apparatus according to one embodiment of the present disclosure;
Fig. 4 is a perspective view showing a modified embodiment of the pressing unit of Fig. 3;
Fig. 5 is a cross-sectional view showing a ring assembly of an electrode manufacturing apparatus according to another embodiment of the present disclosure; and
Fig. 6 is a schematic diagram showing an electrode manufacturing apparatus according to another embodiment of the present disclosure.

### [DETAILED DESCRIPTION OF THE EMBODIMENTS]

The present disclosure will be described in more detail below. Prior to the description, the terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

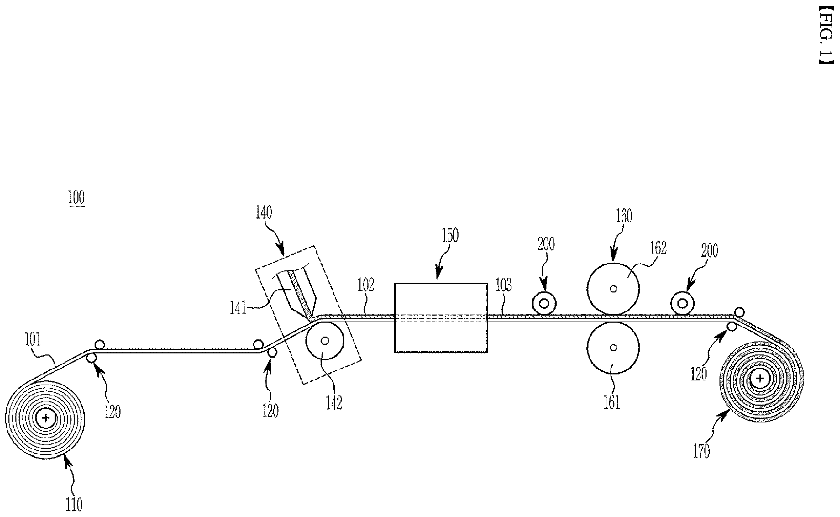

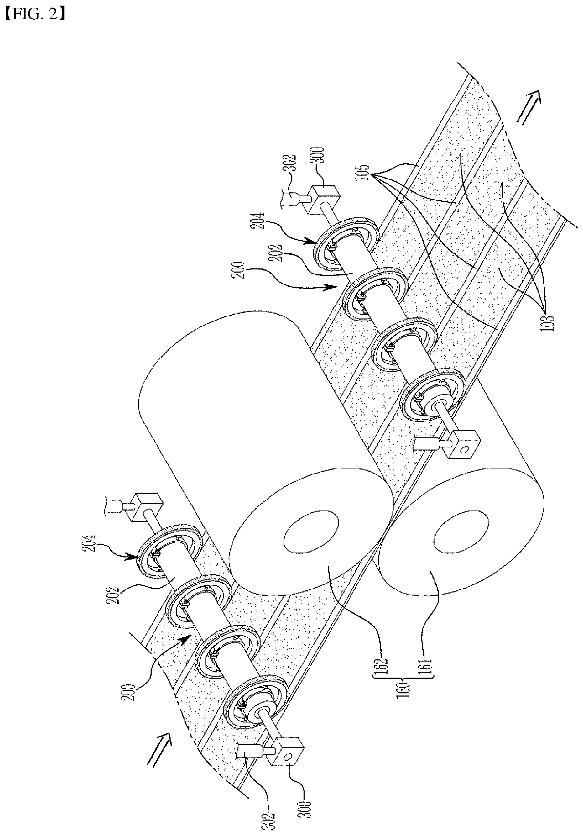

Fig. 1 is a schematic diagram showing an electrode manufacturing apparatus according to one embodiment of the present disclosure. Fig. 2 is a partial perspective view showing an electrode manufacturing apparatus according to one embodiment of the present disclosure. As shown in Fig. 1, the electrode manufacturing apparatus 100 includes a roller-shaped unwinder 110 in which a sheet-shaped current collector 101 made of a metal material (e.g., copper) for a positive electrode or a negative electrode of a secondary battery is wound.

The current collector 101 unwound from the unwinder 110 is transferred along one direction (from left to right with reference to Fig. 1) by the transfer unit 120 of the electrode manufacturing apparatus 100. Here, the transfer unit 120 may include a plurality of rolls.

The electrode active material 102 is applied (coated) onto the current collector 101, which is transferred by the transfer unit 120, by using the coating unit 140 of the electrode manufacturing apparatus 100, and the coated electrode active material 102 is dried through the drying unit 150 of the electrode manufacturing apparatus 100.

The electrode active material layer 103 dried by the drying unit 150 is rolled by the rolling unit 160 of the electrode manufacturing apparatus 100, and the current collector 101 including the rolled electrode active material layer 103 is wound around a winder 170 of the electrode manufacturing apparatus 100.

In the present embodiment, the coating unit 140 may include a coating die 141 that flows out the electrode active material 102 toward the current collector 101, and a coater roll 142 that is arranged so as to face the coating die 141 with the current collector 101 being interposed therebetween to apply tension to the current collector 101.

In the present embodiment, the coating of the electrode active material 102 by the coating unit 140 may be performed such that a plurality of electrode active material layers 103 are provided on the current collector 101. Referring to Fig. 2, the current collector 101 is provided with three rows of electrode active material layers 103, wherein a non-coated part 105 is maintained between the electrode active material layers 103 to which the electrode active material is not applied and the electrode active material layer 103, and between the electrode active material layer 103 and the edge of the current collector 101. For example, the current collector 101 has four rows of non-coated parts 105 formed therein.

Moreover, the drying unit 150 is configured to evaporate the solvent from the electrode active material 102 to form the electrode active material layer 103, and the rolling unit 160 may include a pair of rollers 161 and 162 arranged with the current collector 101 interposed therebetween, and the winder 170 may be made in the shape of a roller.

Meanwhile, a pressing unit 200 that presses the non-coated part 105 is arranged on the current collector 101 adjacent to the rollers 161 and 162 serving as the rolling unit 160, in order to prevent occurrence of defects such as a folding phenomenon on the non-coated part 105 due to the force generated when the electrode active material layer 103 is rolled by the rolling unit 160.

The pressing unit 200 may be arranged at the rear end of the rolling unit 160 on the basis of the transfer direction of the current collector 101 (e.g., the arrow direction shown in Fig. 2). Fig. 2 illustrates that the pressing unit 200 is arranged on both sides of the rolling unit 160, that is, at the front and rear ends of the rolling unit 160.

In the present embodiment, the pressing unit 200 includes a roll member 202 that has a predetermined diameter and length and is rotated by a driving source (not shown). In addition, the pressing unit 200 includes a ring assembly 204 that is detachably coupled to the roll member 202. The ring assembly 204 comes into contact with the non-coated part 105 while rotating in conjunction with the rotation of the roll member 202, and presses the non-coated part 105.

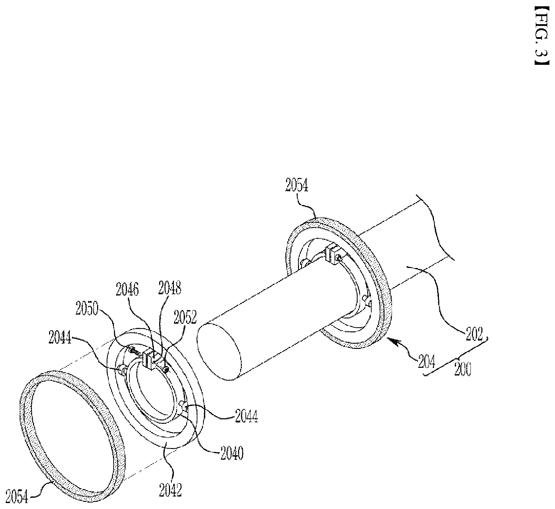

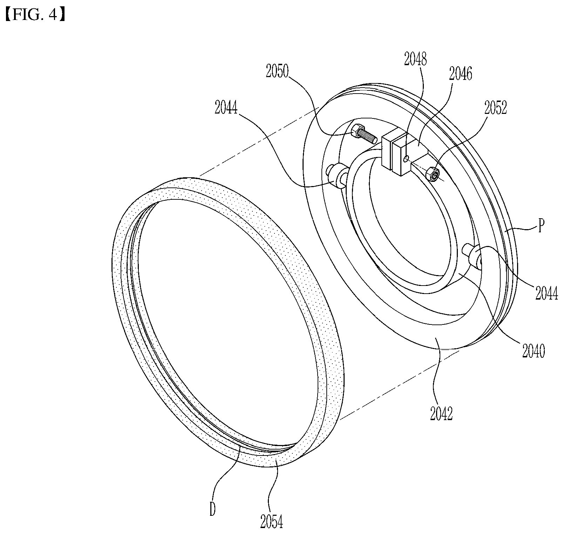

Fig. 3 is a perspective view illustrating a pressing unit of an electrode manufacturing apparatus according to one embodiment of the present disclosure. Fig. 4 is a perspective view showing a modified embodiment of the pressing unit of Fig. 3.

In the present embodiment, the ring assembly 204 of the pressing unit 200 includes a first ring member 2040 and a second ring member 2042. The first ring member 2040 and the second ring member 2042 are connected to each other, and the second ring member 2042 may have a circular shape having a larger diameter than the first ring member 2040.

In the case of the embodiment shown in Figs. 2 and 3, the first ring member 2040 and the second ring member 2042 are fixed to each other by a connection member 2044 disposed oppositely between the first ring member 2040 and the second ring member 2042. Thereby, the first ring member 2040 is spaced apart from the second ring member 2042 by a distance corresponding to the length of the connection member 2044.

The second ring member 2042 is formed in a complete ring shape, while the first ring member 2040 is made in a ring form in which both ends, that is, both ends disposed on the upper side with reference to the drawing are formed as free ends. Thereby, the first ring member 2040 can be moved by its own elastic force up to both ends while the portion connected to the connection member 2044 is assumed as a fixed point. The extension parts 2046 are respectively extended at both ends of the first ring member 2042.

The extension part 2046 has a predetermined length and is arranged parallel to the longitudinal direction of the roll member 202, the length may be larger than the width of the first ring member 2040, and the width may be smaller than the distance between the first ring member 2040 and the second ring member 2042.

Further, the respective extension parts 2046 are provided with an opening 2048 for screw coupling of the coupling screw 2050 and the nut 2052, respectively. That is, because the coupling screw 2050 is inserted into the opening 2048 of the extension part 2046, and coupled with the nut 2052, a first ring member 2040 can be fixed to the roll member 202, and the first ring member 2040 can be spaced apart from the roll member 202 due to the release of the coupling screw 2050 and the nut 2052. This will be explained in more detail below.

In the present disclosure, the attachment and detachment of the first ring member 2040 to the roll member 202 cannot be performed only by the coupling structure of the above coupling screw and nut.

Meanwhile, a third ring member 2054 having an elastic force may be coupled to the second ring member 2042. In the present embodiment, the third ring member 2054 is provided as a rubber and coupled to the outer peripheral surface of the second ring member 2042. Of course, the third ring member 2054 may be composed of a member made of other materials that can have an elastic force as well as rubber. As the third ring member 2054 is formed of a material capable of having an elastic force such as rubber, it may help that the current collector 101 travels smoothly. In other words, since the third ring member 2054 has an elastic force, it can play a role of pulling the current collector 101 using a frictional force during rotation in a state of being in contact with the current collector 101.

Further, since the third ring member 2054 has an elastic force, it is possible to increase the effect of applying tension to the non-coated part 105 and widening the wrinkles.

Furthermore, since the third ring member 2054 has an elastic force, it can be easily coupled to the outer peripheral surface of the second ring member 2042. As a modified embodiment, referring to Fig. 4, a protrusion part P for inserting the third ring member 2054 is formed on the outer peripheral surface of the second ring member 2042, and a depressed part D into which the protrusion part P is fitted may be formed on an inner surface of the third ring member 2054.

Referring to Figs. 2 and 3 again, the width of the second ring member 2042 and the width of the third ring member 2054 may be substantially identical, and the widths of the second and third ring members 2042 and 2054 may be identical to or smaller than the width of the non-coated part 105.

A plurality of ring assemblies 204 configured in this manner may be provided on the roll member 202. In this embodiment, as described above, since three rows of the active material layers 103 and four rows of the non-coated parts 105 are formed on the current collector 101, four ring assemblies 204 can be arranged on the roll member 202 at intervals corresponding to the width of the active material layer 103 in accordance with the four rows of the non-coated parts 105. At this time, two ring assemblies 204 can be provided on the roll member 202, so that the extension part 2046 faces in the same direction (e.g., to the left with reference to Fig. 2), and the other two ring assemblies 204 can be provided on the roll member 202, so that the extension part 2046 faces in the same other direction (e.g., to the right with reference to Fig. 2).

The coupling between the ring assembly 204 and the roll member 202 is performed by inserting a coupling screw 2050 into the opening 2048 of the extension part 2046 of the first ring member 2040 and coupling a nut 2052 thereto, in a state where the first ring member 2040 of the ring assembly 204 is inserted into the roll member 202 and stopped at a desired position.

Due to the coupling of the coupling screw 2050 and the nut 2052, the first ring member 2040 may be fixed to the roll member 202, and thus the ring assembly 204 can be fixed to the roll member 202.

When the active material layer 103 is rolled by the rolling unit 160 during manufacturing of the secondary battery electrode, the pressing unit 200 comes into contact with the non-coated part 105 and presses the non-coated part 105. That is, as the roll member 202 of the pressing unit 200 rotates, the ring assembly 204 rotates and presses the non-coated part 105. Therefore, even if the force of rolling of the rolling unit 160 is transmitted to the non-coated part 105, the non-coated part 105 can be pressed by the pressing unit 200 to maintain tension, thereby preventing defects such as a folding phenomenon. That is, the pressing unit 200 can displace the roll member 202 relative to the current collector 101 by the elevation arm 300 and the cylinder 302 connected to the roll member 202, thereby adjusting the degree of tension that presses the non-coated part 105.

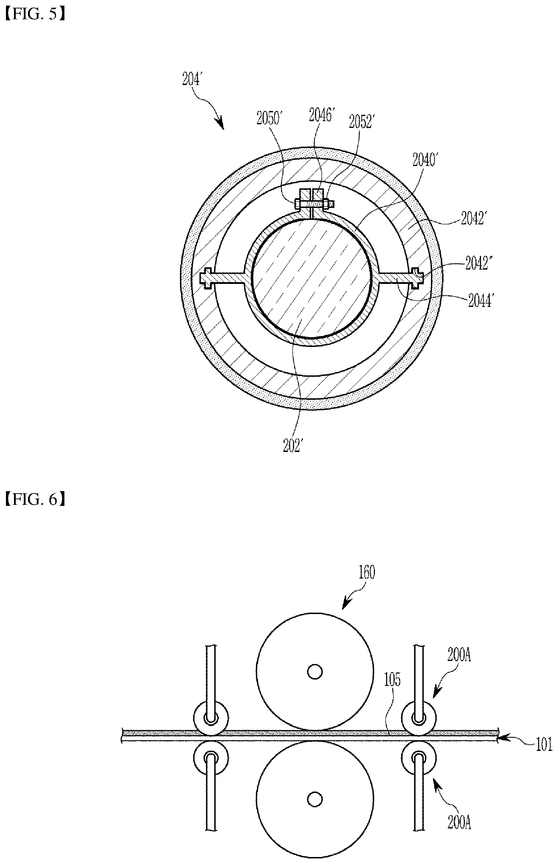

Fig. 5 is a cross-sectional view showing a ring assembly of an electrode manufacturing apparatus according to another embodiment of the present disclosure.

The ring assembly 204' of the other embodiment is constructed to be substantially identical to the ring assembly of the above-mentioned embodiment, while it is constructed by changing only the connection relationship between the first ring member 2040' and the second ring member 2042'.

In another embodiment, a mutual connection between the first ring member 2040' and the second ring member 2042' can rotatably couple the second ring member 2042' to the first ring member 2040' or can rotatably couple the first ring member 2040' to the second ring member 2042'.

For example, as shown in Fig. 5, the connection member 2044' extending from the first ring member 2040' is rotatably coupled to the groove 2042" provided in the second ring member 2042', and the first ring member 2040' can be rotatably coupled to the second ring member 2042'.

Due to this configuration, the ring assembly 204' according to another embodiment can fix the first ring member 2040' to the roll member 202' by coupling the coupling screw 2050' and the nut 2052', even if the extension part 2046' extending from both ends of the first ring member 2040' is vertically extended from both ends between the first ring member 2040' and the second ring member 2042'.

Fig. 6 is a schematic diagram showing an electrode manufacturing apparatus according to another embodiment of the present disclosure.

As shown in Fig. 6 , in another embodiment, the pressing unit 200A may be arranged so as to press not only to the non-coated part region of one side surface (e.g., upper side surface) of the current collector 101 and the non-coated part region of the other side surface (e.g., the lower side surface) of the current collector 101 opposing to the one side surface, as in the previously described embodiment.

### [Description of Reference Numerals]

100: electrode manufacturing apparatus
101: current collector
102: electrode active material
103: electrode active material layer
105: non-coated part
110: unwinder
120: transfer unit
140: coating unit
150: drying unit
160: rolling unit
200: pressing unit
202: roll member
204: ring assembly

## Claims

1. A manufacturing apparatus (100) of an electrode for a secondary battery comprising:
a transfer unit (120) that transfers a current collector from an unwinder (110);
a coating unit (140) that applies an electrode active material (102) to at least one surface of the current collector (101);
a rolling unit (160) that is arranged on the transfer unit (120) and rolls the electrode active material layer (103) composed of the electrode active material (102); and
a pressing unit (200) that is arranged adjacently to the rolling unit (160) and presses the non-coated part of the current collector (101) to which the electrode active material (102) is not applied,
wherein the pressing unit (200) comprises,
a roll member (202); and
a ring assembly (204) that is detachably coupled to the roll member (202) and comes into contact with the non-coated part to press the non-coated part, and wherein the ring assembly (204) comprises:
a first ring member (2040, 2040') that is detachably fixed to the roll member (202); and
a second ring member (2042, 2042') that has a larger diameter than the first ring member (2040, 2040') and is connected to the first ring member (2040, 2040').

2. The manufacturing apparatus of the electrode according to claim 1, wherein:
a third ring member (2054) having an elastic force is coupled to an outer peripheral surface of the second ring member.

3. The manufacturing apparatus of the electrode according to claim 2, wherein:
the third ring member (2054) is a rubber.

4. The manufacturing apparatus of the electrode according to claim 2, wherein:
a depressed part is formed on the inner surface of the third ring member (2054), and a protrusion part is formed on the outer peripheral surface of the second ring member (2042, 2042'), and
the protrusion part of the second ring member (2042, 2042') is fitted into the depressed part of the third ring member (2054).

5. The manufacturing apparatus of the electrode according to claim 1, wherein:
the first ring member (2040, 2040') is made in a form in which both ends are formed as free ends, and extension parts (2046) each extending from both ends are provided with an opening (2048) for screw coupling.

6. The manufacturing apparatus of the electrode according to claim 5, wherein:
the respective extension parts (2046) have a length greater than the width of the first ring member (2040, 2040') and is arranged parallel to the roll member (202).

7. The manufacturing apparatus of the electrode according to claim 5, wherein:
the first ring member (2040, 2040') is rotatably coupled to the second ring member (2042, 2042').

8. The manufacturing apparatus of the electrode according to claim 7, wherein:
the respective extension parts (2046) extend vertically from both ends.

9. The manufacturing apparatus of the electrode according to claim 1, wherein:
a width of the second ring member (2042, 2042') is smaller than a width of the non-coated part.

10. The manufacturing apparatus of the electrode according to claim 1, wherein:
both ends of the roll member (202) are connected to an elevation arm and a cylinder, respectively, so that the roll member (202) is displaced with respect to the current collector (101).

11. The manufacturing apparatus of the electrode according to claim 1, wherein:
the ring assembly (204) is arranged at equal intervals on the roll member (202) and is provided by plural numbers.

12. The manufacturing apparatus of the electrode according to claim 1, wherein:
the pressing unit (200) is arranged at the front and rear ends of the rolling unit (160), respectively.

13. The manufacturing apparatus of the electrode according to claim 1 or 11, wherein:
the pressing unit (200) is configured so as to press the non-coated part of the first surface of the current collector (101) and the non-coated part of the second surface opposing to the first surface, respectively.

## Patentansprüche

1. Herstellungsvorrichtung (100) für eine Elektrode einer Sekundärbatterie, umfassend:
eine Transfereinheit (120), welche einen Stromsammler von einem Abwickler (110) transferiert;
eine Beschichtungseinheit (140), welche ein aktives Elektrodenmaterial (102) auf wenigstens eine Fläche des Stromsammlers (101) aufträgt;
eine Walzeinheit (160), welche an der Transfereinheit (120) angeordnet ist und die aktive Elektrodenmaterial-Schicht (103) walzt, welche aus dem aktiven Elektrodenmaterial (102) besteht; und
eine Presseinheit (200), welche benachbart zu der Walzeinheit (160) angeordnet ist und den nicht beschichteten Teil des Stromsammlers (101) presst, auf welchen das aktive Elektrodenmaterial (102) nicht aufgebracht ist,
wobei die Presseinheit (200) umfasst:
ein Walzelement (202); und
eine Ringanordnung (204), welche lösbar mit dem Walzelement (202) gekoppelt ist und mit dem nicht beschichteten Teil in Kontakt kommt, um den nicht beschichteten Teil zu pressen,
und wobei die Ringanordnung (204) umfasst:
ein erstes Ringelement (2040, 2040'), welches lösbar an dem Walzelement (202) befestigt ist; und
ein zweites Ringelement (2042, 2042'), welches einen größeren Durchmesser als das erste Ringelement (2040, 2040') aufweist und mit dem ersten Ringelement (2040, 2040') verbunden ist.

2. Herstellungsvorrichtung für eine Elektrode nach Anspruch 1, wobei:
ein drittes Ringelement (2054), welches eine elastische Kraft aufweist, mit einer äußeren Umfangsfläche des zweiten Ringelements gekoppelt ist.

3. Herstellungsvorrichtung für eine Elektrode nach Anspruch 2, wobei:
das dritte Ringelement (2054) ein Gummi ist.

4. Herstellungsvorrichtung für eine Elektrode nach Anspruch 2, wobei:
ein vertiefter Teil an der inneren Fläche des dritten Ringelements (2054) gebildet ist und ein vorspringender Teil an der äußeren Umfangsfläche des zweiten Ringelements (2042, 2042') gebildet ist, und
der vorspringende Teil des zweiten Ringelements (2042, 2042') in den vertieften Teil des dritten Ringelements (2054) eingepasst ist.

5. Herstellungsvorrichtung für eine Elektrode nach Anspruch 1, wobei:
das erste Ringelement (2040, 2040') in einer Form hergestellt ist, in welcher beide Enden als freie Enden gebildet sind und Erstreckungsteile (2046), welche sich jeweils von beiden Enden erstrecken, mit einer Öffnung (2048) für eine Schraubenkopplung bereitgestellt sind.

6. Herstellungsvorrichtung für eine Elektrode nach Anspruch 5, wobei:
die jeweiligen Erstreckungsteile (2046) eine Länge aufweisen, welche größer als die Breite des ersten Ringelements (2040, 2040') und parallel zu dem Walzelement (202) angeordnet ist.

7. Herstellungsvorrichtung für eine Elektrode nach Anspruch 5, wobei:
das erste Ringelement (2040, 2040') rotierbar an das zweite Ringelement (2042, 2042') gekoppelt ist.

8. Herstellungsvorrichtung für eine Elektrode nach Anspruch 7, wobei:
sich die jeweiligen Erstreckungsteile (2046) vertikal von beiden Enden erstrecken.

9. Herstellungsvorrichtung für eine Elektrode nach Anspruch 1, wobei:
eine Breite des zweiten Ringelements (2042, 2042') kleiner als eine Breite des nicht beschichteten Teils ist.

10. Herstellungsvorrichtung für eine Elektrode nach Anspruch 1, wobei:
beide Enden des Walzelements (202) mit einem Hebearm bzw. einem Zylinder verbunden sind, so dass das Walzelement (202) bezüglich des Stromsammlers (101) verlagert ist.

11. Herstellungsvorrichtung für eine Elektrode nach Anspruch 1, wobei:
die Ringanordnung (204) bei gleichen Intervallen an dem Walzelement (202) angeordnet ist und durch mehrere Anzahlen bereitgestellt ist.

12. Herstellungsvorrichtung für eine Elektrode nach Anspruch 1, wobei:
die Presseinheit (200) an den vorderen bzw. hinteren Enden der Walzeinheit (160) angeordnet ist.

13. Herstellungsvorrichtung für eine Elektrode nach Anspruch 1 oder 11, wobei:
die Presseinheit (200) derart eingerichtet ist, dass sie den nicht beschichteten Teil der ersten Fläche des Stromsammlers (101) bzw. den nicht beschichteten Teil der zweiten Fläche gegenüber der ersten Fläche presst.

## Revendications

1. Appareil de fabrication (100) d'une électrode pour une batterie secondaire comprenant :
une unité de transfert (120) qui transfère un collecteur de courant à partir d'un dérouleur (110) ;
une unité de revêtement (140) qui applique un matériau actif d'électrode (102) sur au moins une surface du collecteur de courant (101) ;
une unité d'enroulement (160) qui est agencée sur l'unité de transfert (120) et enroule la couche de matériau actif d'électrode (103) composée du matériau actif d'électrode (102) ; et
une unité de pressage (200) qui est agencée de manière adjacente à l'unité d'enroulement (160) et presse la partie non revêtue du collecteur de courant (101) sur laquelle le matériau actif d'électrode (102) n'est pas appliqué,
dans lequel l'unité de pressage (200) comprend,
un élément rouleau (202) ; et
un ensemble d'anneaux (204) qui est accouplé de manière détachable à l'élément rouleau (202) et entre en contact avec la partie non revêtue pour presser la partie non revêtue, et dans lequel l'ensemble d'anneaux (204) comprend :
un premier élément anneau (2040, 2040') qui est fixé de manière détachable à l'élément rouleau (202) ; et
un deuxième élément anneau (2042, 2042') qui a un diamètre plus grand que le premier élément anneau (2040, 2040') et est relié au premier élément anneau (2040, 2040').

2. Appareil de fabrication de l'électrode selon la revendication 1, dans lequel :
un troisième élément anneau (2054) ayant une force élastique est accouplé à une surface périphérique extérieure du deuxième élément anneau.

3. Appareil de fabrication de l'électrode selon la revendication 2, dans lequel :
le troisième élément anneau (2054) est un caoutchouc.

4. Appareil de fabrication de l'électrode selon la revendication 2, dans lequel :
une partie en creux est formée sur la surface intérieure du troisième élément anneau (2054), et une partie en saillie est formée sur la surface périphérique extérieure du deuxième élément anneau (2042, 2042'), et
la partie en saillie du deuxième élément anneau (2042, 2042') est ajustée dans la partie en creux du troisième élément anneau (2054).

5. Appareil de fabrication de l'électrode selon la revendication 1, dans lequel :
le premier élément anneau (2040, 2040') est réalisé sous une forme dans laquelle les deux extrémités sont formées en tant qu'extrémités libres, et des parties d'extension (2046) s'étendant chacune à partir des deux extrémités sont dotées d'une ouverture (2048) pour un accouplement à vis.

6. Appareil de fabrication de l'électrode selon la revendication 5, dans lequel :
les parties d'extension (2046) respectives ont une longueur supérieure à la largeur du premier élément anneau (2040, 2040') et sont agencées parallèlement à l'élément rouleau (202).

7. Appareil de fabrication de l'électrode selon la revendication 5, dans lequel :
le premier élément anneau (2040, 2040') est accouplé de manière rotative au deuxième élément anneau (2042, 2042').

8. Appareil de fabrication de l'électrode selon la revendication 7, dans lequel :
les parties d'extension (2046) respectives s'étendent verticalement à partir des deux extrémités.

9. Appareil de fabrication de l'électrode selon la revendication 1, dans lequel :
une largeur du deuxième élément anneau (2042, 2042') est inférieure à une largeur de la partie non revêtue.

10. Appareil de fabrication de l'électrode selon la revendication 1, dans lequel :
les deux extrémités de l'élément rouleau (202) sont reliées à un bras d'élévation et à un cylindre, respectivement, de sorte que l'élément rouleau (202) soit déplacé par rapport au collecteur de courant (101).

11. Appareil de fabrication de l'électrode selon la revendication 1, dans lequel :
l'ensemble d'anneaux (204) est agencé à intervalles égaux sur l'élément rouleau (202) et est fourni en plusieurs exemplaires.

12. Appareil de fabrication de l'électrode selon la revendication 1, dans lequel :
l'unité de pressage (200) est agencée aux extrémités avant et arrière de l'unité d'enroulement (160), respectivement.

13. Appareil de fabrication de l'électrode selon la revendication 1 ou 11, dans lequel :
l'unité de pressage (200) est configurée de manière à presser la partie non revêtue de la première surface du collecteur de courant (101) et la partie non revêtue de la seconde surface opposée à la première surface, respectivement.
